**Europäisches Patentamt**

**European Patent Office**

**Office européen des brevets**

(19)

(11) Publication number: **0 014 204**

**B1**

(12) **EUROPEAN PATENT SPECIFICATION**

(45) Date of publication of patent specification: **25.07.84**

(21) Application number: **79900355.3**

(22) Date of filing: **23.03.79**

(86) International application number:
**PCT/US79/00195**

(87) International publication number:
**WO 79/00855 01.11.79 Gazette 79/22**

(51) Int. Cl.³: **E 21 B 43/00,**
**E 21 B 47/09, G 01 B 7/00,**
**G 01 N 27/02**

(54) **METAL TYPE DETECTOR FOR DRILL PIPES.**

(30) Priority: **31.03.78 US 892284**

(43) Date of publication of application:
**20.08.80 Bulletin 80/17**

(45) Publication of the grant of the patent:
**25.07.84 Bulletin 84/30**

(84) Designated Contracting States:
**CH DE FR GB SE**

(56) References cited:
**FR - A - 1 578 547**
**GB - A - 1 126 019**
**US - A - 2 250 703**
**US - A - 2 686 039**
**US - A - 2 817 808**
**US - A - 2 906 944**
**US - A - 3 546 478**
**US - A - 3 896 371**
**US - A - 4 121 657**

(73) Proprietor: **PYATT, Lawrence Aden**
**755 East Date Street, Apt. A-11**
**Brea, CA 92621 (US)**

(73) Proprietor: **THOMPSON, Robert Wayne**
**5210 Ensley Court**
**Riverside, CA 92505 (US)**

(72) Inventor: **PYATT, Lawrence Aden**
**755 East Date Street, Apt. A-11**
**Brea, CA 92621 (US)**
Inventor: **THOMPSON, Robert Wayne**
**5210 Ensley Court**
**Riverside, CA 92505 (US)**

(74) Representative: **Jones, Colin et al,**
**W.P. THOMPSON & CO. Coopers Building Church**
**Street**
**Liverpool L1 3AB (GB)**

Courier Press, Leamington Spa, England.

## Description

This invention relates to a method and a device for determining the position in a drill pipe in a well bore, of apparatus for taking photographic pictures of a compass or inclinometer located in said drill pipe.

Backgroud of the invention

The invention is useful in connection with the taking of photographic pictures of a compass, or inclinometer or both, at the bottom of a well bore. Well drillers can control the direction of deep wells by control of the drilling tools. But control is accomplished in terms of adjustment to change from current direction as drilling proceeds. That means that the driller must know the well's current direction from time to time. Current direction is determined by lowering a compass or inclinometer to the bottom of the well and then photographing the compass assembly to record its direction in azimuth and inclination. The task of photographing a compass at the bottom of a well is both complicated and expensive.

The compass needle is acted on by the earth's magnetic field. To permit, that, the compass must be disposed in a non-magnetic section of pipe at the time that the photograph is taken. Current practice is to include a short length of non-magnetic pipe at or near the lower end of the drill pipe. That length of pipe is ordinarily made of Monel and it is called a "collar". The compass must be disposed in that section when it is photographed. Care must be taken to ensure that the compass assembly is not in motion at the time the photograph is taken. Current practice is to include a detector which detects absence of motion and a means for precluding exposure of the film for some selected time interval measured from the last action which could cause movement of the compass needle. (US—A—3546478).

To prevent premature exposure, it has been necessary to ensure that instrument motion does not stop until the instrument has reached the position at which the photograph is to be taken. To overcome that requirement, a conventional clock has been used so that photograph taking occurs at some fixed time after the clock is started at the well head. That solution is subject to failure if, for any reason, the time required to lower the instrument is other than the predicted time.

This invention relates to the problem of ensuring that the compass is in the non-magnetic collar. To pull the drilling tools from a deep well is very costly. It is important to be able to determine reliably and with a high degree of certainty whether the compass is, or is not, in the non-magnetic section of the drill pipe.

Another object is to provide an improved well compass position detector.

US—A—2558427 describes a well casing collar detector in which two premanent or electro-magnetic circuits spaced longitudinally are each completed via respective poles by an adjacent portion of the well casing, if present. As the detector is lowered past a collar joining together two casing sections, each of the two poles of each magnetic circuit in turn passes the casing discontinuity at the joint. When the pole of one magnetic circuit adjacent the other circuit passes the casing discontinuity, the flux path of that magnetic circuit is completed via the joint collar, the adjacent pole of the other magnetic circuit and a core joining together the two magnetic circuitry. The resulting fluctuations in magnetic flux through the core induce current pulses in a coil wound about the core and such pulses are transmitted without amplification to an indicator or recorder on the surface via the cable by which the detector is suspended. The device thus only operates while it is being lowered or raised and its depth in the well can be calculated by multiplying the number of signal pulses received by the length of the casing sections.

US—A—2906944 describes the use of the detector of US—A—2558427 for detecting magnetically coded valves strategically placed along the length of a drill string in a well.

Neither US—A—2558427 nor US—A—2906944 discloses the use of an oscillator.

GB—A—1126019 describes well logging equipment which includes detector coils arranged in a magnetic flux path which passes through the well casing. The changes in the magnetic reluctance of the flux path as the detector is lowered past joints in the casing produce pulses which are amplified and modulated to produce 2000 Hz. bursts. The latter are transmitted up the suspension cable for the detector and are detected by a receiver containing a demodulator and amplifier. By counting the numbers of demodulated pulses as the detector is lowered and knowing the length of each casing section, the depth to which the detector has been lowered can be calculated. Again, the output signal pulse bursts are only obtainable while the detector is being lowered or raised. The detector for producing the pulses themselves may be as described in US—A—2558427 and the 2000 Hz oscillator output is simply used as a carrier wave for the pulses.

In none of the patent specifications US—A—2558427, US—A—2906944 and GB—A—1126019 is the detector coil energised; rather the coil is simply used as a generator for generating pulses as the coil is moved along the pipe. When there is no movement, no pulses are generated and accordingly the device cannot be used for determining whether it is a non-magnetic part of the drill pipe when the device is stationary, as it must be when taking a photograph.

US—A—2686039 describes a detector in which a detector coil is magnetically coupled to the adjacent portion of the drill pipe in which the detector is located. The coil forms part of an oscillator whose nominal frequency is between 20 and 50 kHz. The actual frequency varies with local variations in the magnetic permeability of the drill pipe. Such variations in permeability may be produced by stresses in the drill pipe, such stresses being deliberately set up by applying tension and/or torsion to the upper end of the drill pipe. If a portion of the pipe is stuck in the well hole, the stresses are not transmitted below the point of fixation of the stuck pipe so that a change in oscillator frequency can be observed as the detector is raised or lowered past the point of fixation. Such changes are observed by comparing oscillations transmitted to the surface via the suspension cable with reference oscillations to produce a beat frequency of 100 to 1000 Hz which can be measured.

The present invention resides in a method of determining the position in a drill pipe in a well bore, of apparatus for taking photographic pictures of a compass or inclinometer located in said drill pipe, said method determining whether a coil of the metal detector disposed within said drill pipe, the greater part of whose length is magnetic and a relatively short pair of whose length is formed of non-magnetic metal, is in the non-magnetic part of the metal pipe, in which method an alternating current flows through the coil such that a magnetic field is alternately created and collapsed around said coil and such that said field extends into said pipe, the magnitude of electrical change in said coil is measured, and a change that corresponds to the change produced by the presence of the coil in the non-magnetic part of the metal pipe is identified, the coil being energised from an alternating voltage source of frequency between 300 and 800 Hz.

The invention includes a device for determining the position in a drill pipe in a well bore, of apparatus for taking photographic pictures of a compass or inclinometer located in said drill pipe, the greater part of whose length is magnetic and a relatively short part of whose length is formed of non-magnetic metal, said device being adapted to determine whether it is within the non-magnetic part of the metal pipe, said device comprising a coil, means for holding the coil oriented with its magnetic axis pointing in a direction having a component parallel to the axis of the pipe, an oscillator by virtue of which an alternating current flows through the coil such that a magnetic field is created which extends into the pipe, and means for observing an electrical value dependent on the magnitude of said magnetic field, characterised in that the oscillator has an output voltage whose frequency is between 300 and 800 Hz and this output voltage is applied to a circuit which contains the coil, and in that means are provided to compare the voltage at a point in series connection with the coil with a predetermined voltage and to provide an indicating signal indicative of whether the voltage oscillations at said point are greater than a selected voltage variation.

The drawings.
    In the drawings:
    Figure 1 is a schematic representation of an instrument according to the invention positioned in a section of drill pipe shown in cross-section;
    Figure 2 is a diagram illustrating the method of the invention when detecting pipe of magnetic material;
    Figure 3 is a diagram illustrating the method of the invention when detecting pipe of non-magnetic but metallic material; and
    Figure 4 is a circuit diagram of a preferred embodiment of the invention.

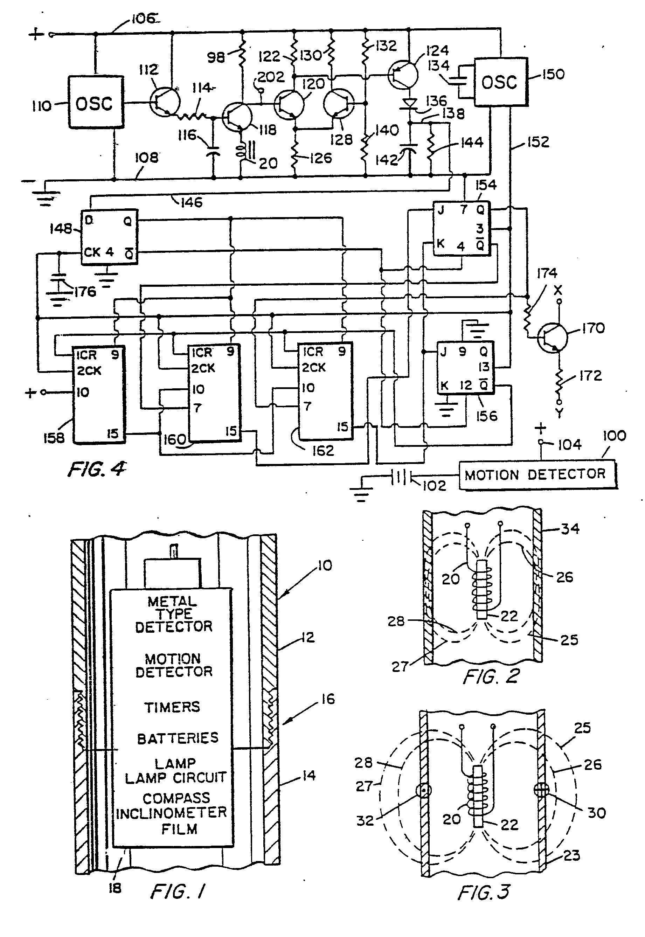

    In Figure 1, the numeral 10 designates a section of drill pipe including a fragment of the lower end of a magnetic steel pipe 12 and a fragment of the upper end of a pipe 14 of non-magnetic metal. The two are interconnected at threaded region 16. Disposed within the pipe is an instrument 18 whose purpose is to photograph the position of a compass assembly on a film.
    Sometimes the compass serves as an inclinometer as well as a compass, and in some cases a separate inverted plumb-bob is added to indicated inclination. Those elements form no part of the invention, nor does the film which is placed on one side of the compass and inclinometer combination, or the lamp that is placed on the other side. The invention in its preferred embodiment is concerned with illumination of the lamp and with illuminating the lamp only when the compass is in the non-magnetic, metallic portion of the pipe, after sufficient time has elapsed to allow the compass needle to become steady.
    To perform those steady functions, the instrument of the preferred embodiment includes a metal type detector, timers, a power source in the form of batteries, lamp, lamp circuit, a compass and inclinometer, and a film. In the preferred form these elements are housed in a non-magnetic case which may be formed of electrically conductive material such, for example, as Monel metal. The diagram of Figure 4 includes the batteries, metal type detector, timers, and terminals for connection to the lamp circuit. The metal type detector includes a sensing coil 20 and its operation will be explained in connection with Figures 2 and 3.
    In a preferred form, the sensing coil 20 is wound about a straight elongated form, preferably about an elongated ferrite core. It is housed in the instrument case 18 so that the axis of the coil is parallel to, and preferably coincident with, the axis of the case 18. The case is arranged so that its axis can be expected to be substantially parallel with the axis of the drill pipe. The requirement, in the preferred embodiment, is that the axis of the coil be more parallel than transverse to the axis of the drill pipe. The reason for that arrangement is explained in connection with Figure 3.

In Figure 3, the coil and its core 22 are disposed within a Monel pipe 23. When current flows through the coil a magnetic field is established around the coil. That field is represented, in accordance with convention, by closed loops 25, 26, 27 and 28 show as dashed lines which extend through the core, and than out at one end and around the back into the core at the opposite end. No loop crosses any other according to convention. Since the permeability of Monel is near unity, the flux lines pass through the pipe walls in a pattern similar to what would be expected in air. As the flux field builds, the flux lines "cut" the pipe wall and that movement of magnetism interacts with the free electrons in the electrically conductive pipe to cause a motion of those electrons according to the right hand rule. The electrons flow around the circumference of the pipe so that the pipe acts as a single "shorted" turn secondary winding of large cross sectional area. The resistance of the pipe is low so that is presents a heavy load to the primary winding 22 which draws a heavy current. Current flow is represented in Figure 3 by the "flow away" and "flow toward" symbols 30 and 32, respectively.

Returning to Figure 4, the coil 20 is in series with the emitter-collector circuit of a transistor 118 and a load resistor 98. The transistor is cut off during part of each cycle so the result is a large current change and a large voltage change at the collector of transistor 118 when the coil 20 is in Monel pipe.

If the coil 20 were oriented so that its axis were normal to the pipe axis, the flux direction would be changed by 90 degrees and so would the direction of the induced current. The current would flow in the longitudinal direction of the pipe and the pipe would act as a secondary winding in much lesser degree determined primarily by dissymmetry in the magnetic field.

Sensitivity is also affected by conductivity of the protective case 18. That case must be made of non-magnetic material so that the magnetic field will not be confined to the case but can reach the pipe. Sensitivity of the instrument is reduced in the sense that a portion of the current change in the coil results from current flow in the case. However, it will be seen that that effect does not lessen ability of the instrument to distinguish steel pipe from a non-magnetic pipe.

Magnetic lines of flux follow the path of least reluctance, and when the coil 20 is disposed within a pipe 34 of magnetic material, the flux lines will extend from one end of core 22 through the non-magnetic case of instrument 18 into and along the magnetic pipe and then back through the case of instrument 18 to core 22. There will be less "cutting" of the pipe by flux lines. A current will be induced in the pipe wall as it was in the Monel pipe of Figure 3, but higher resistance, eddy currents and other losses and phase stifling effects serve to minimize that current. Further, the greater magnetic efficiency in the magnetic circuit results in a stronger field, collapse of more flux when transistor 118 cuts off current, and it creates a greater counter-electromotive force in coil 20. The result is a lesser current swing. That is true notwithstanding the circulating current around the case of instrument 18 and the load it represents.

The end result is that presence of coil 20 within the steel pipe results in a magnetic action which produces a counter-electromotive force in the coil and an opposition to current change which substantially nullifies the effect of the instrument case of a shorted turn. There is no such nullification when the instrument is housed in a non-magnetic pipe so current change is large whether it be the result of the instrument case or the pipe, or both, acting as a shorted turn.

There is another effect to be accounted for. Lenz's Law describes that counter-electromotive force has a magnitude that depends upon the rate of change of magnetic flux. At very low frequencies, the counter-electromotive force opposing flow in coil 20 is very low notwithstanding that the coil is disposed within the steel portion of the pipe. Thus, at very low frequencies, the signal output at the collector of transistor 118 will be relatively high when the coil is housed in steel. That signal strength diminishes rapidly when the frequency is increased. An opposite effect occurs at low frequencies when the coil 20 is disposed in the Monel portion of the pipe. At low frequencies the flux change is slow and the magnitude of the circulating current in the "shorted turn" pipe is small. That means that the load is small and the self-inductance of coil 20 is adequate to limit current flow. Accordingly, the voltage excursion at the collector of transistor 118 is relatively small. However, the signal magnitude increases rapidly with frequency. In an actual circumstance, the non-magnetic collar has an inside diameter of about three inches and a wall thickness greater than one inch (25 mm). The instrument case has an outside diameter of about two inches (50 mm) and a wall thickness on the order of one quarter inch (6.3 mm). The lower frequency limit for operation of the instrument will be about 300 Hz. At frequencies below that it becomes impossible to distinguish Monel from steel, or the results are unreliable. As frequency is increased above 300 Hz, the differential in magnitude between the signal in steel and the signal in Monel is increased until some optimum frequency is reached. For the dimensions given, that frequency will fall in the range of 400 to 800 Hz. Above that, the current variation in coil 20 is diminished when the coil is disposed in Monel.

The effect of self-inductance in the coil overtakes the effect of the heavy loading so that at about 800 Hz, for the values given, the magnitude of the signal is reduced to the point where detection becomes difficult and unreliable. Accordingly, there is a frequency window in which the metal type detector must be operated. That window can be shifted by changing the characteristics of the coil 20, but the preferred embodiment employs the component values listed below, and a frequency of operation between 400 and 600 Hz. In the particular case shown, the frequency is 500 Hz.

At the upper portion of Figure 4, line 106 is connected to positive terminal 104 and power line 108 is connected to earth. The circuit includes an oscillator 110 whose frequency is relatively low, and it need comprise no more than a series of three inverters and some feedback resistors and a capacitor. Its output is connected to the base of NPN transistor 112. Its collector is connected to the positive line 106. Its emitter is connected to earth through the series combination of a resistor 114 of an electrolytic capacitor 16. The junction of the resistor and the capacitor is connected to the base NPN transistor 118 whose collector is connected to the positive line 106 through resistor 98, mentioned earlier. The emitter of the transistor is connected through the sensing coil 20 to earth line 108. The output of transistor 118 is taken from its collector and applied to the base of an NPN transistor 120 whose collector is connected to the positive line through a load resistor 122 and to the base of PNP tránsistor 124. The emitter of transistor 120 is connected to earth through resistor 126, and it is connected to the emitter of a transistor 128 whose collector is connected to the positive line through load resistor 130. The base of transistor 128 is connected to the junction between two resistors, 132 and 140, which are connected between the positive line and the negative line in series, in that order. The emitter of transistor 124 is connected to the positive line 106 and its collector is connected through a diode 136 to a line 138. A capacitor 142 and a resistor 144 are connected in parallel between line 138 and the negative line 108. Another output line 146 is connected from line 138 to the "D" input terminal of a D-type flip-flop 148.

Except for the D-type flip-flop, the circuit thus far described is the metal type detector. Its function is to apply a positive signal to the D terminal of the flip-flop when coil 20 is located within the Monel section of the pipe and to apply a negative signal to the D input of flip-flop 148 when the sensing coil 20 is located within a steel portion of the drill pipe. To do that, the output of oscillator 110 is applied to the base terminal of amplifier 112. Current flowing through the collector-emitter circuit of the transistor flows through resistor 114 to charge capacitor 116. The capacitor discharges through the base-emitter circuit of the following transistor 118. The result is the application to the base of transistor 118 of the voltage that appears across capacitor 116. That input voltage causes a corresponding flow of current in the emitter-collector circuit of transistor 118, except that, as current flows, counter-electromotive force develops an opposing voltage across the sensing coil 20 in the manner previously described. The output signal of that transistor is applied to the base of transistor 120 whose emitter bias is controlled by current flow through transistor 128. The base of the latter is biased to a fixed value by the voltage divider formed by the combination of resistors 132 and 140. Current flowing through the transistor 128 flows through resistor 126 in the emitter circuit of transistor 120. Only when the base voltage of the transistor 120 exceeds a value determined by the voltage across resistor 126 does current flow in transistor 120. The output of that transistor is taken from its collector and applied to the base of switching transistor 124, which, when turned on, permits current flow through the diode 136 into capacitor 142 so that the output line 138 becomes positive. The capacitor 142 is discharged through resistor 144. The effect is that line 146 will remain positive while the coil 20 is disposed within the Monel collar, but the line will return to its negative state when the coil 20 is disposed within the steel pipe. In the latter case, the voltage at the base of transistor 120 is insufficient, in view of the voltage across resistor 126, to permit current flow through transistor 120 for the turning on of transistor 124. Accordingly, the charge on capacitor 142 will leak off through resistor 144 and line 146 will be returned to a low state and will remain low.

The edge clocked flip-flop 148 initiates a counting and control cycle when a high signal is applied to its D input by line 146 from the output line 138. Clock signals for the digital portion of the circuit are generated in an oscillator 150 whose output signals are applied by a line 152 to the clock pins 3 and 13 of JK flip-flops 154 and 156, respectively. Clock signals are also applied to the clock pin CK of flip-flop 148 and to pin 2CK of each of three counters, 158, 160 and 162. The counters are cleared and preset when a low signal is applied to their number 1CR pins from the Q-output of flip-flop 156. Counting begins when a high signal is applied to the enable pin, number 9, of each of the counters from the Q output of flip-flop 148.

The circuit is arranged so that two counting functions are performed. Counters 158 and 162 are connected together as one counter called the exposure time counter, and counters 158 and 160 are connected together as a second counter called the settling time counter. The first of those counters is used to control the time during which the camera light source, the lamp, is illuminated. The second of the counters introduces a time delay between the time when coil 20 has sensed that it is disposed within the Monel section of pipe and the time when energization of the lamp excitation circuit is permitted. Output of the exposure time counter is taken from pin 15 of counter 162, and the output of the settling time counter is taken at pin 15 of the counter chip 160. Pin 15 of counter chip 162 is connected to the K input of flip-flop 154 and to the J input of flip-flop 156. The output of counter chip 160 at pin 15 is applied to the J input of counter 154.

Turning to the output end of the circuit, the lamp excitation circuit is connected to terminals X, Y at the right side of Figure 4. Terminal X is at the collector of a switching transistor 170 whose emitter is connected to terminal Y through a resistor 172. The base of that transistor is connected through a resistor 174 to the Q output terminal of flip-flop 154. The transistor 170 is turned on to energize the lamp excitation circuit when the Q output of flip-flop 154 goes high. Q goes high at the clock signal if J is high and K is low.

The function of flip-flop 148 is to start the counters. The function of flip-flop 154 is to control turn-on and turn-off of transistor 170, and the function of flip-flop 156 is to reset the counters after completion of the settling time and the exposure time counts. The exposure counting does not begin until the settling time counter has completed its count and has furnished a high signal to the J input of flip-flop 154. That mode of operation can be achieved because the counters will not count while a low signal is applied to their pin 7. Pin 7 of the exposure time interval counter is driven by the Q output of flip-flop 154, and pin 7 of the settling time counter is driven by the Q-output of flip-flop 154.

The digital circuit operates as follows. Oscillator 150 generates clock signals which are applied to the clock inputs of the several digital devices. However, none of them count or change state until a positive signal appears on line 138 of the metal-type detector circuit and is applied to the D input pin of flip-flop 148. The flip-flop is then clocked so that the Q output goes high. That applies an enable signal to each of the three counter chips. The Q-output of flip-flop 148 goes low, and that signal is applied to the reset pins 4 and 12 of flip-flops 154 and 156, respectively. The counter has been cleared previously, so the counter in counter 158 begins at "0". When that counter reaches maximum count, a high appears at pin 15 and that is applied to the count enable pins 10 of both of the counter chips 160 and 162. Flip-flop 154 has been reset. A high appears at the Q-terminal and that is applied to pin 7 of counter 160 which is thereby enabled. A low is applied to pin 7 of counter 162 which is connected to the Q output of flip-flop 154. That means that the counter 162 is inhibited. When counter 160 reaches maximum count, a high signal appears at its pin 15 and that signal is applied to the J input of flip-flop 154. The K input of that flip-flop, and the J input of flip-flop 156 are low because they are connected to pin 15 of counter 162 which is inhibited. When counter 160 reaches its maximum count, a positive signal is applied to pin J of flip-flop 154 and that flip-flop changes state. A high appears at its Q output, thereby turning on the transistor 170 in the lamp excitation circuit and also enabling the counter 162. When counter 162 reaches full count, a positive signal from pin 15 of counter chip 162 is applied to the K input of flip-flop 154, and the J side of flip-flop 156. Flip-flop 154 resets and flip-flop 156 sets. Accordingly, the Q output of flip-flop 154 goes low to turn off the transistor 170 in the lamp excitation circuit. The Q-output goes high, terminating the signal to counter 160. The K input of the flip-flop 156 is at ground potential, so the appearance of a high at the end of the interval count at terminal J of flip-flop 156 changes its state so that a low appears at the Q-output. That low is applied to clear all of the counters.

The circuit of Figure 4 is arranged so that a photograph will be taken automatically as soon as the compass photographing instrument is positioned so that coil 20 is within the Monel collar, and a time has elapsed sufficient to ensure that the compass assembly has stopped fluctuating.

In a representative circuit, the components may have the following values:
Transistors 112, 120, 118, 170 are type 2N3703;
Transistor 124 is type 2N3703;
D-type flip-flop 148 may be type MC 14013B;
Three counter chips are type MC 14163B;
Flip-flop 154 is type MC 14027B;
Flip-flop 156 is type MC 14584B;
Capacitor 176 has a value of .01 mf;
Capacitor 142 has a value of 1 mf;
Capacitor 116 has a value of 2 mf;
Resistors 122, 130 and 144 are 100 K ohms;
Resistors 126 and 134 are 10K ohms;
Resistor 114 has the value 300 ohms;
Resistor 98 has the value 2700 ohms.

The circuit uses six inverters packaged in chip MC 14069B. Three of those are connected in series to form oscillator 150. In each case, the first inverter in the series is connected in parallel with the series combination of a 1 megohm and a 2 megohm resistor. The junction between the two resistors is connected to the junction between the second and third inverters of the series through a capacitor which, in the case of oscillator 110 has the value .001 mf. The value of the capacitor in oscillator 150 is much larger. Oscillator 150 serves as the clock for the settling time counter and for the exposure time counter. The length of the settling time and exposure will depend upon the characteristics of the film and of the damping characteristics of the compass. Because of that, the value of the clock frequency controlling capacitor 134 is not specified and the counter-connections (number of counts) are not shown in the diagram.. To select them in a given case requires not more than very ordinary skill. Settling time might be anything up to about 1.5 minutes, and the exposure time anything up to forty-five seconds, depending upon which ones are selected of the films and lamps and compasses that are currently in use.

The coil has an inductance of about 233 microhenries. The core material of the coil is magnetic but is non-conductive. The frequency of oscillator 110 is at or near 500 Hz.

In some applications of the invention, when used as a metal detector, or in conjunction with other instruments, it may be desirable to work with analog signals, and, for that purpose, the preferred embodiment includes a terminal 202 at the collector of transistor 118. That terminal could be positioned at any point where the voltage or current variation in coil 20 can be measured, but the collector position is now preferred.

While a preferred embodiment of the invention has been described, other embodiments of the invention are possible. A list of variations would include changes in coil configuration, changes in the type of non-magnetic material in which the coil was housed, and changes in housing configuration and, of course, other changes are possible within the invention.

## Claims

1. A method of determining the position in a drill pipe in a well bore, of apparatus for taking photographic pictures of a compass or inclinometer located in said drill pipe, said method determining whether a coil of a metal detector disposed within said drill pipe, the greater part of whose length is magnetic and a relatively short part of whose length is formed of non-magnetic metal, is in the non-magnetic part of the metal pipe, in which method an alternating current flows through the coil such that a magnetic field is alternately created and collapsed around said coil and such that said field extends into said pipe, the magnitude of electrical change in said coil is measured, and a change that corresponds to the change produced by the presence of the coil in the non-magnetic part of the metal pipe is identified, the coil being energised from an alternating voltage source of frequency between 300 and 800 Hz.

2. A method as claimed in claim 1, in which the frequency of the alternating voltage is between 400 and 600 Hz.

3. A device for determining the position in a drill pipe (10) in a well bore, of apparatus for taking photographic pictures of a compass or inclinometer located in said drill pipe (10), the greater part (12) of whose length is magnetic and a relatively short part (14) of whose length is formed of non-magnetic metal, said device being adapted to determine whether it is within the non-magnetic part (14) of the metal pipe, said device comprising a coil (20), means for holding the coil (20) oriented with its magnetic axis pointing in a direction having a component parallel to the axis of the pipe, an oscillator (110) by virtue of which an alternating current flows through the coil (20) such that a magnetic field is created which extends into the pipe (10), and means for observing an electrical value dependent on the magnitude of said magnetic field, characterised in that the oscillator (110) has an output voltage whose frequency is between 300 and 800 Hz and this output voltage is applied to a circuit (98, 118) which contains the coil (20), and in that means (120—132, 140) are provided to compare the voltage at a point (202) with a predetermined voltage and to provide an indicating signal indicative of whether the voltage oscillations at said point are greater than a selected voltage variation.

4. A device as claimed in claim 3, which includes means (158, 160, 162, 170) for producing an output signal (across X, Y) for a preselected period (by means of 62) commencing after a given period (by means of 160) which follows production of said indicating signal.

## Patentansprüche

1. Verfahren zur Bestimmung der Lage eines Bildaufnahmeapparates in einem in einer Bohrung befindlichen Bohrrohr, bei dem der Bildaufnahmeapparat zum Aufnehmen fotografischer Bilder eines in dem Bohrrohr angeordnet Kompasses oder Neigungsmessers dient und durch das Verfahren bestimmt wird, ob sich die Spule eines innerhalb des Bohrrohres angeordneten Metalldetektors im unmagnetischen Teil des Bohrrohres befindet, dessen Länge zu einem größeren Teil magnetisch ist und zu einem relativ kurzen teil aus unmagnetischem Metall besteht, wobei bei dem Verfahren ein Wechselstrom durch die Spule fließt, derart, daß um die Spule abwechselnd ein Magnetfeld aufgebaut wird und zusammenbricht und daß sich das Magnetfeld in das Rohr erstreckt, weiterhin die Größe der elektrischen Änderung und der Spule gemessen und eine Änderung, die der durch die Anwesenheit der Spule im unmagnetischen Teil des Metallrohres erzeugten Änderung entspricht, ermittelt wird, wobei die Spule durch eine Wechselspannungsquelle mit einer Frequenz zwischen 300 und 800 Hz erregt wird.

2. Verfahren nach Anspruch 1, dadurch gekennzeichnet, daß die Frequenz der Wechselspannungsquelle zwischen 400 und 600 Hz liegt.

3. Vorrichtung zur Bestimmung der Lage eines Bildaufnahmeapparates in einem in einer Bohrung befindlichen Bohrrohr (10), bei dem ein größerer Teil (12) der Rohrlänge magnetisch ist und ein relativ kurzer Teil (14) der Rohrlänge aus unmagnetischem Metall besteht, wobei der Bildaufnahmeapparat zum Aufnehmen fotografischer Bilder eines in dem Bohrrohr (10) angeordneten Kompasses oder Neigungsmessers dient und sich die Vorrichtung zur Bestimmung dessen eignet, ob sie sich im unmagnetischen Teil (14) befindet, mit einer Spule (20), einer Einrichtung zum Halten der Spule (20) derart, daß ihre magnetische Achse in eine Richtung ausgerichtet ist, die eine zur Rohrachse parallele Komponente aufweist, einem Oszillator (110), aufgrund dessen ein Wechselstrom durch die Spule (20) fließt derart, daß ein Magnetfeld aufgebaut wird und sich in das Rohr (10) erstreckt, und einer Einrichtung zum Beobachten eines von der Größe des Magnetfeldes abhängigen elektrischen Wertes, dadurch gekennzeichnet, daß der Oszillator (110) eine Ausgangsspannung aufweist, deren Frequenz zwischen 300 und 800 Hz liegt und die einem Schaltkreis (98, 118) an liegt, der die Spule (20) enthält, une daß Einrichtungen (120—132, 140) vorgesehen sind, um die Spannung an einer Stelle (202) mit einer vorbestimmten Spannung zu vergleichen und ein Signal zur Anzeige dessen vorzusehen, ob die Spannungsänderungen an dieser Stelle (202) größer sind als eine ausgewählte Spannungsänderung.

4. Vorrichtung nach Anspruch 3, gekennzeichnet durch eine Einrichtung (158, 160, 162, 170) zum Erzeugen eines Ausgangssignals (über X, Y) für einen vorgewählten Zeitraum (mittels 62), der nach einem vorgegebenen Zeitraum (mittels 160) nach Erzeugung des Anzeigesignals beginnt.

**Revendications**

1. Procédé de détermination de la position, dans un tube de forage situé dans un puits, d'un appareil de photographie d'une boussole ou d'un inclinomètre situé dans ce tube de forage, ce procédé permettant de déterminer si une bobine d'un détecteur de métal, placé dans le tube de forage, dont la plus grande partie de la longueur est magnétique et une partie relativement courte de la longueur est une métal non magnétique, est dans la partie non magnétique du tube métallique, procédé dans lequel un courant alternatif passe dans la bobine de façon qu'un champ magnétique soit alternativement créé et supprimé autour de la bobine et que ce champ pénètre dans le tube, l'amplitude de changement · électrique' dans la bobine est mesurée et un changement correspondant au changement produit par la présence de la bobine dans la partie non magnétique du tube métallique est identifié, la bobine étant alimentée par une source de tension alternative de fréquence comprise entre 300 et 800 Hz.

2. Procédé selon la revendication 1, dans lequel la fréquence de la tension alternative est comprise entre 400 et 600 Hz.

3. Dispositif pour la détermination de la position, dans un tube de forage (10) situé dans un puits, d'un appareil de photographie d'une boussole ou d'un inclinomètre situé dans ce tube de forage (10), dont la plus grand partie (12) de la longueur est magnétique et une partie relativement courte (14) de la longueur est en métal non magnétique, ce dispositif étant agencé pour déterminer s'il est dans la partie non magnétique (14) du tube métallique, ce dispositif comprenant une bobine (20), des moyens pour maintenir cette bobine (20) orientée de façon telle que son axe magnétique pointe dans une direction ayant une composante parallèle à l'axe du tube, un oscillateur (110) grâce auquel un courant alternatif passe dans la bobine (20) de façon que soit créé un champ magnétique qui pénètre dans le tube (10), et des moyens d'observation d'une valeur électrique dépendant de l'intensité de ce champ magnétique, caractérisé par le fait que l'oscillateur (110) a une tension de sortie dont la fréquence est comprise entre 300 et 800 Hz et cette tension de sortie est appliquée à un circuit (98, 118) qui contient la bobine (20), et qu'il est prévu des moyens (120 à 132, 140) de comparaison de la tension en un point (202) à une tension prédéterminée et de production d'un signal indicateur indiquant si les oscillations de tension audit point sont plus grandes qu'une variation de tension choisie.

4. Dispositif selon la revendication 3, comportant des moyens (158, 160, 162, 170) pour la production d'un signal de sortie (entre X et Y) pendant une période choisie (au moyen de 162) commençant au bout d'une période donnée (au moyen de 160) qui suit la production dudit signal indicateur.

0 014 204

FIG. 4

FIG. 1

FIG. 2

FIG. 3

MOTION DETECTOR

METAL TYPE DETECTOR

MOTION DETECTOR

TIMERS

BATTERIES

LAMP
LAMP CIRCUIT

COMPASS
INCLINOMETER
FILM

OSC